# EUROPEAN PATENT APPLICATION

(11) **EP 3 026 605 A1**
(43) Date of publication of application: **01.06.2016**
(21) Application number: 14194781.2
(22) Date of filing: 25.11.2014
(51) Int. Cl.: G06Q 10/06, G06F 9/30, G06F 17/30, G06F 11/34, G06Q 50/04

(54) **Evaluating the execution time of reports in a MES system**

(71) Applicant: Siemens Aktiengesellschaft, 80333 München (DE)
(72) Inventor: Corsini, Giorgio, 16148 Genova (IT); Tavani, Ornella, 16149 Genova (IT)
(74) Representative: Maier, Daniel Oliver

(57) **Abstract**

A method and a system for evaluating the execution time of reports in a MES system, wherein a report is a program comprising a set of data related statements, whose execution, at run-time, is aimed at providing end-users with specific operational information; the invention comprising: providing a set of reports and providing an evaluation function to be applied to at least two reports of the set, where the function result is a value for comparing the execution time of at least two reports of the set.

## Description

The present invention relates to a process and to a system for controlling a manufacturing plant with a MES system according to the preamble of claims 1 and 5 respectively.

In the world of industrial automation of today, in order to increase competitiveness, manufacturing companies need to simultaneously reduce time-to-market, increase process visibility and production flexibility, optimize forecasting and scheduling, and reduce scrap, stock levels and downtimes; all while ensuring optimal quality and production efficiency across all global facilities.

Hence in order to meet these demanding goals, manufacturing companies require an integrated IT infrastructure that helps them in coordinating production on a global scale and, if necessary, in real time. The Manufacturing Execution System (MES) is generally known as the IT layer that integrates the business systems (e.g. ERP) and production control systems.

The Siemens Corp. offers a broad range of MES products, under its SIMATIC® product family.

As defined by the Manufacturing Enterprise Solutions Association (MESA International), the MES system "is a dynamic information system that drives effective execution of manufacturing operations", by managing "production operations from point of order release into manufacturing to point of product delivery into finished goods" and by providing "mission critical information about production activities to others across the organization and supply chain via bidirectional communication." The international standard for developing MES systems is commonly referred as ISA-95 or S95.

The functions that a MES system usually includes are resource allocation and status, dispatching production orders, data collection/acquisition, quality management, maintenance management, performance analysis, operations/detail scheduling, document control, labor management, process management and product tracking.

Thus, the goal of MES systems developed by software suppliers is to provide manufacturing companies (the customers) with tools for measuring and controlling production activities with the aim of boosting profitability, increasing productivity, improving quality and process performance to manufacturing plants.

As used herein, a software application is a set of software components developed by software developers to perform some useful actions within a MES system, e.g. monitoring values coming from plant process or controlling a plant device.

Typically, at engineering or configuration time, system engineers or system integrators flexibly customize MES applications according to the specific manufacturing plant requirements.

Instead, at runtime, MES applications are utilized by end-users.

Supervisors, production managers, quality managers, plant operators, line responsible personnel and other end-user personnel make use of MES reports in order to understand and to analyze the production information relevant to their tasks.

Thus, MES reports are widely used in any production plant, being aimed at document the operational details reflecting the activity of the production plant.

A report might be seen as a program executing a set of instructions, for example instructions for accessing process and production data stored in repositories available in the manufacturing plant, instructions for performing data contextualization and/or data aggregation, and instructions for organizing the resulting information in some easy to view format such as for example a graphical one or a tabular one. Each report can usually be executed on recurring or, as required, time basis.

Hence, a report is a program comprising a set of data-related statements, for example statements for data retrieval, data calculation, data aggregation and data rendering.

Usually, executing reports requires to access - in a short time - all the needed data, gathering such data from disparate systems, perform data aggregations and data calculations in order to present the correct information to the corresponding end users.

Unfortunately, the response time required to perform such activities is generally not known a-priori (i.e. without executing the report), so that the end user may often find himself waiting for a long time before having the report final result.

For example the execution time of a report may vary between a few seconds or less to several minutes, even dozens of them, due to the fact that, as above explained, the report execution may prove to be quite complex, especially in MES systems.

As an example, in a MES system, the "end of shift" report may be required to collect production data (e.g. the orders that have been executed, the final materials that have been produced) from the MES system, to calculate the line efficiency indicator and other KPIs (Key Performance Indicator) by using historical data and link them to process information, as e.g. energy consumption, provided by the automation layer.

In state of the art MES systems, a technique for evaluating the report response-time typically consists in the full execution of a report at run-time.

Unfortunately, such known technique has the drawback that, during the engineering phase, system engineers, who design reports to provide to end-user personnel, are not able to evaluate the response time of report execution since they cannot simulate thoroughly a run-time manufacturing scenario.

In a MES system, where engineering phase customization of a given customer manufacturing plant plays a key role, it is essential to provide system engineers with information on report execution response time already at engineering time.

It is therefore the aim of the present invention to overcome the above mentioned drawback, in particular by providing a method and a system for evaluating the execution time of reports in a MES system during the engineering phase. The aforementioned aim is achieved by a method and a system for evaluating the execution time of reports in a MES system as the ones described in the appended claims.

Furthermore, a computer program element can be provided, comprising computer program code for performing steps according to the above mentioned method when loaded in a digital processor of a computing device.

Additionally, a computer program product stored on a computer usable medium can be provided, comprising computer readable program code for causing a computing device to perform the mentioned method.

Embodiments of the invention enable the users, system engineers or final users, to evaluate the execution times of a set of reports.

Embodiments of the invention enable the user to have estimations on report execution times which was in the art obtainable only by the report developer himself/herself or by actually executing the report at run-time.

Embodiments of the invention enable the system engineer to estimate the report execution time before runtime execution. Such estimation can advantageously be used by the system engineer, during the engineering phase, to adjust the report parameters accordingly so to avoid long waiting times for the final end user executing the report at run-time.

Embodiments of the invention allow to evaluate if a subset of reports is slower than other reports and to conveniently allocate the execution of slower reports to a more powerful system and/or in convenient time frames, e.g. during the night or week-end.

Embodiments of the invention allow providing warning messages for the final user at run-time for particularly slow reports, such as for example with an icon providing information on a long execution time to be expected.

The invention will now be described in preferred but not exclusive embodiments with reference to the accompanying drawing, wherein:

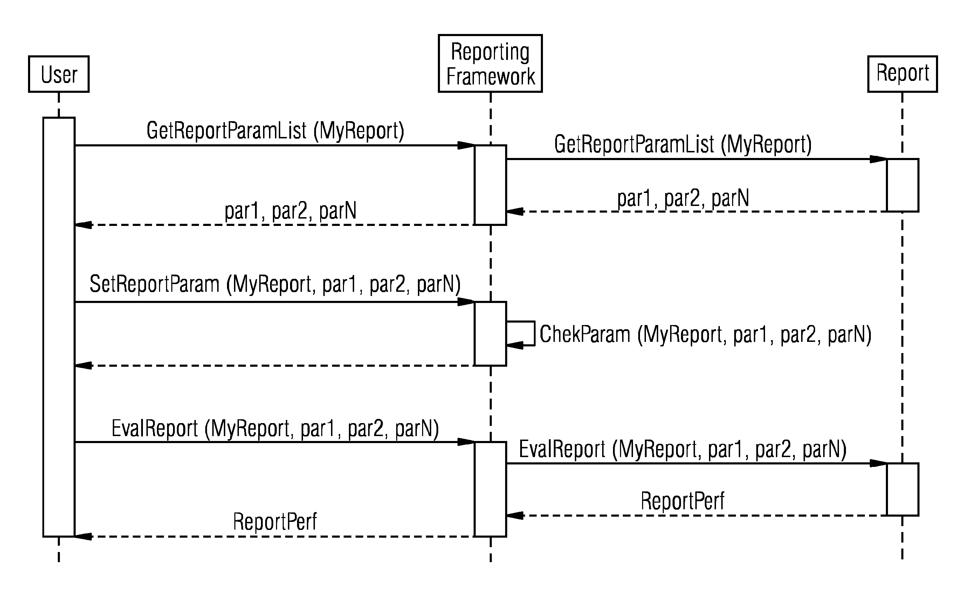

- Figure 1: is a sequence diagram schematically describing an example embodiment of the present invention.

At least some embodiments of the present invention address the above described issue in which a method or system is evaluating the execution time of reports in a MES system. A report is a program comprising a set of data related statements whose execution, at run-time, is aimed at providing end-users with specific operational information;

A set of reports is provided. An evaluation function to be applied to at least two reports of the set is provided, where the function result is a value for comparing the execution time of at least two reports of the set.

In invention embodiments, the data related statements may be for example one or more of the following statements:
- statements for data retrieval;
- statements for data calculation;
- statements for data aggregation;
- statements for data rendering.

Preferably, the evaluation function may take into account some of the following characteristics of the data related statements of a report:
- number of involved tables;
- number of involved views;
- number of involved joins;
- the usage of the "LIKE" statement in a query;
- the usage of the "ORDER BY" statement in a query;
- the usage of other relevant statements in a query;
- the usage of variable fields in a query;
- the usage of indexes;
- the type of database structure.

The evaluation function is provided within the MES system to be applied to each report of the set. The evaluation function is in charge of evaluating the execution time of the statements contained in the report, by considering the usage of certain query statements, such as for example, the number of tables, the database structure of OLTP databases or other databases.

In embodiments of the invention, each report may be conveniently provided with a set of input parameters so that by changing the values of such input parameters, a user can advantageously sort reports according to their evaluation function result.

### Simple Example Embodiment

In a simple example embodiment, there is MES system comprising a set S of M reports Rep1, Rep2... RepM. An evaluation function EvalReport() is provided for every report belonging to the set S.

The software developer who developed the reports provides within the MES system a function for evaluating the execution time of the reports.

This function, when executed for example at engineering time, returns a value, e.g. a natural number in the range 1 to 100, representing a weight assigned to the evaluated report in order to allow the user to sort in an orderly manner the reports belonging to set S according to the report execution time.

For example, let us assume there are two reports R1 and R2 belonging to the set S, and the evaluation function has been executed for both reports returning respectively result Res1 and Res2 as follows: Res1 = EvalReport (Rep1) and Res2 = EvalReport (Rep2).

Advantageously, by sorting the returned evaluation function results Res1 and Res2, it is possible to estimate, before the actual report execution at run-time, whether the execution time of report Rep1 is most probably slower or faster than the execution time of report Rep2, e.g. when Res1>Res2 or when Res1<Res2, respectively. In other invention embodiments, according to the meaning given to the value of the evaluation function result, Res1<Res2 may mean that the execution of report Rep1 is slower than the execution of report Rep2.

It is noted that the returned value of the EvalReport() function usually is not representing the actual execution time of the report but only a weighted estimation of it. In fact, the execution time of a report is extremely dependent from the system, e.g. the hardware, the network etc.

The returned value of the EvalReport() function may preferably be valid only for the reports belonging to the set S and it is to be used to compare performances of the reports of such set S. In order to be provide a meaningful and effective result, the EvalReport() function is preferably the same for every report in the set S.

The EvalReport() function may not execute all the queries managed by the report itself, but usually it may take into consideration a variety of considered meaning parameters, as for example:
- number of involved tables;
- number of involved views;
- number of involved joins;
- the usage of the "LIKE" statement in the query;
- the usage of the "ORDER BY" statement in the query;
- the usage of variable fields in the query;
- the usage of indexes.

Figure 1 is a sequence diagram schematically describing an example embodiment of the present invention, where the user is a system engineer configuring reports for final end user at engineering time.

In this sequence diagram the following main actions are shown:
- Action 1: by invoking GetReportParamList(MyReport), the user gets the list of the report parameters par1, par2,parN, by using a reporting framework which in turn retrieves the parameter list from the report itself;
- Action 2: the user sets the values for each parameter of the list with SetReportParam(MYReport,par1,par2,parN);
- Action 3: the user asks for an evaluation of the report execution time ReportPerf by invoking EvaIReport(MyReport,par1 ,par2,parN).

Actions 2 and 3 can be advantageously be repeated with different sets of parameter values so as to be able to find the report which has the lowest estimated execution time.

In this example, reports are executed with a set of parameters (par1, par2... parN) which may be the parameters needed for the query configurations.

For example, if it is required to calculate a quantity of products manufactured on a line, during the night shift, I need parameters such product name, name of the line, name of the shift etc. However, by knowing a priori the evaluation function result one can decide which line is most convenient to be used to obtain a given report, with the condition that the two reports having different input parameters provide equivalent information to the end user. For example, production line 2 is only putting the caps to the bottles while production line 1 is more complex line since there are more equipment pieces such as the mixing and bottling devices.

The evaluation function advantageously enables the system engineer to compare two available reports in a set, and select the report where the evaluation function returns a result which is smaller in value.

Moreover, in other embodiments, the system engineer may conveniently select the preferred report in a report set with the optimal evaluation function result, after having tuned the values of the input parameters of the reports of the set.

## Claims

1. Method of evaluating the execution time of reports in a MES system, wherein a report is a program comprising a set of data related statements, whose execution, at run-time, is aimed at providing end-users with specific operational information;
the method comprising the following steps:
- providing a set of reports;
- providing an evaluation function to be applied to at least two reports of the set, where said function result is a value for comparing the execution time of at least two reports of the set.

2. The method according to claim 1, wherein the data related statements are selected from the group consisting of:
- statements for data retrieval;
- statements for data calculation;
- statements for data aggregation;
- statements for data rendering.

3. The method according to any of the previous claims, wherein the evaluation function takes into account at least one of the following characteristics of the data related statements of a report:
- number of involved tables;
- number of involved views;
- number of involved joins;
- the usage of the "LIKE" statement in a query;
- the usage of the "ORDER BY" statement in a query;
- the usage of other relevant statements in a query;
- the usage of variable fields in a query;
- the usage of indexes;
- the type of database structure.

4. The method according to any of the previous claims **characterized in that** it is implemented in software.

5. System for evaluating the execution time of reports in a MES system, wherein a report is a program comprising a set of data related statements, whose execution, at run-time, is aimed at providing end-users with specific operational information;
the system comprising the following means:
- means for providing a set of reports;
- means for providing an evaluation function to be applied to at least two reports of the set, where said function result is a value for comparing the execution time of at least two reports of the set.
